# EUROPÄISCHE PATENTANMELDUNG

(11) **EP 3 745 544 A1**
(43) Veröffentlichungstag der Anmeldung: **02.12.2020**
(21) Anmeldenummer: 19177085.8
(22) Anmeldetag: 28.05.2019
(51) Int. Cl.: H01R 39/38, H02K 9/28

(54) **SCHLEIFRINGSYSTEM MIT VERBESSERTER KÜHLUNG**

(71) Anmelder: Siemens Aktiengesellschaft, 80333 München (DE)
(72) Erfinder: Binder, Herbert, 94127 Neuburg (DE); Friedl, Daniel, 94081 Fürstenzell (DE); Gruber, Robert, 94099 Ruhstorf (DE); Memminger, Oliver, 94127 Neuburg a. Inn (DE); Raskopf, Andrej, 94036 Passau (DE); Schifferer, Klaus, 94152 Neuhaus am Inn (DE)

(57) **Zusammenfassung**

Die Erfindung betrifft eine Bürstenhalterung (1) eines Schleifringsystems (13), einer elektrisch erregten dynamoelektrischen Maschine (14), wobei die Bürstenhalterung (1) Mittel zur Kühlung von Bürsten (8) in der Bürstenhalterung (1) und/oder der Bürstenhalterung (1) vorsieht.

## Beschreibung

Die Erfindung betrifft eine Bürstenhalterung eines Schleifringsystems einer dynamoelektrischen erregten Maschine, ein Trägersegment mit derartigen Bürstenhalterungen, ein Schleifringsystem mit derartigen Trägersegmenten, ein Belüftungssystem eines Schleifringsystems und eine dynamoelektrische Maschine.

Schleifringsysteme dienen dazu in den rotierenden Teil einer dynamoelektrischen Maschine, also den Läufer, eine elektrische Erregung einzubringen. Durch immer höhere Leistungen der dynamoelektrischen Maschine, beispielsweise Generatoren von Windkraftanlagen werden die dafür erforderlichen übertragbaren elektrischen Leistungen immer höher. Dies führt zu einer zusätzlichen Erwärmung der Schleifringsysteme, deren Entwärmung aufgrund einer zusätzlichen Kosten- und Bauraumoptimierung dieser Schleifringsysteme und deren Komponenten immer schwieriger wird. Durch die nunmehr bei kompakterer Ausführung anzustrebenden höheren Strombelastungen des Schleifringsystems steigen die Temperaturen, insbesondere der Bürsten und der Bürstenhalter erheblich an. Durch übermäßige Temperaturerhöhung entstehen Schäden an dem Schleifringsystem und auch an den Bürsten.

Um den steigenden Temperaturen entgegenzutreten, werden ab einer bestimmten Baugröße der dynamoelektrischen Maschine Schleifringkörper mit größeren Außendurchmessern eingesetzt. Dazu werden auch die verwendeten Bürstenhalterungen, die auch als Bürstenbrücken bezeichnet werden, dementsprechend größer dimensioniert. Jedoch nimmt dadurch der Arbeitsbereich des Schleifringsystems wesentlich mehr Raum ein. Durch Vergrößern des Schleifringsystems, wie Schleifringgehäuse und deren Komponenten werden höhere Materialkosten verursacht. Des Weiteren führt diese leistungsbedingte Vergrößerung auch zu einer ungewollten Vergrößerung der Außenabmessung der dynamoelektrischen Maschine.

Ausgehend davon liegt der Erfindung die Aufgabe zugrunde, ein Schleifringsystem zu schaffen, das auch bei einer vergleichsweise kompakten Ausführung des Schleifringsystems die maximal zulässigen Temperaturen des Schleifringsystems und deren Komponenten nicht überschreitet.

Die Lösung der gestellten Aufgabe gelingt durch eine Bürstenhalterung eines Schleifringsystems, einer elektrisch erregten dynamoelektrischen Maschine, wobei die Bürstenhalterung Mittel zur Kühlung von Bürsten in der Bürstenhalterung und/oder der Bürstenhalterung vorsieht.

Durch die erfindungsgemäße Bürstenhalterung kann nunmehr jede Bürste in der Bürstenhalterung vergleichsweise gut gekühlt werden, sodass die übertragbare Leistung in einen Läufer einer dynamoelektrischen Maschine gesteigert werden kann.

Die Lösung der gestellten Aufgabe gelingt ebenso durch Trägersegment mit einer oder mehreren erfindungsgemäßen Bürstenhalterungen.

Dies trägt zu einer Vergleichmäßigung des Leistungsflusses bzw. des Stromes über die Bürsten einer elektrischen Phase eines Schleifringsystems bei.

Die Lösung der gestellten Aufgabe gelingt auch durch Schleifringsystem mit einem oder mehrerer erfindungsgemäßer Trägersegmente. Durch die verbesserte Kühlleistung von Bürsten und/oder Bürstenhalterung und damit eines Trägersystems wird auch das Schleifringsystem thermisch nahezu gleichmäßig belastet und ausreichend gekühlt, so dass eine kompakte Bauweise des Schleifringsystems vorliegt.

Die Lösung der gestellten Aufgabe gelingt auch durch Belüftungssystem mit einem erfindungsgemäßen Schleifringsystem. Das Belüftungssystem führt Luft innerhalb des Schleifringsystems, das geschlossen oder offen ausgeführt ist, derart, dass Bürstenhalterungen, und/oder Bürstentaschen und/oder Bürsten kühlbar sind. Die gelingt indem der erforderliche Kühlluftstrom, erzeugt durch Radial- und/oder Axiallüfter innerhalb oder an dem Schleifringsystem vorgesehen sind.

Die Lösung der gestellten Aufgabe gelingt auch durch eine dynamoelektrische Maschine, insbesondere Generator einer Windkraftanlage mit einem erfindungsgemäßen Belüftungssystem oder einer erfindungsgemäßen Schleifringsystem.

Durch Vergrößern der Oberfläche der Bürstentaschen mittels Rippen, Nadeln oder Noppen an der Oberfläche der Bürstentaschen, als auch gegebenenfalls Ausnehmungen an den Bürstentaschen, wird die Kühloberfläche der Bürstentaschen und/oder der überströmten Fläche der Bürsten durch einen Kühlluftstrom vergrößert. Die Rippen können dabei als Rechteckrippen, Dreieckrippen, Trapezrippen, konkave oder konvexe parabolische Rippen ausgeführt sein, ebenso wie die Nadeln als zylindrische- konische, konkave, parabolische- oder konvexe parabolische Nadeln oder Noppen ausgeführt sein können.

Durch zumindest einen innerhalb des Schleifringsystems angeordneten Lüfter wird Luft an den Bürstentasche und Bürstenhalterungen vorbeigeführt, die oberflächenvergrößernde Strukturen aufweisen.

Vorteilhafterweise können dabei dementsprechende Lüfter eingesetzt werden, die einen Radialluftstrom und/oder einen in Umfangsrichtung verlaufenden Kühlluftstrom generieren. Dies kann unterstützt werden, in dem die Noppen, Nadeln oder Rippen dementsprechend in Strömungsrichtung eines generierten Kühlluftstroms angeordnet werden.

Durch die Reduzierung der Betriebstemperaturen im Schleifringsystem werden dadurch niedrigere Temperaturen geschaffen, die somit auch vergleichsweise geringere Bauabmessungen eines Schleifringsystems und deren angrenzenden Komponenten gestatten. Des Weiteren kann die übertragene Leistung von den Bürsten auf den jeweiligen Schleifring auch mit vergleichsweise weniger Bürsten pro elektrische Phase betrieben werden, ohne dass dabei die Bürsten Kühlungsprobleme aufweisen.

Es sind somit höhere Leistungsstufen der gesamten Schleifringsysteme und damit der dynamoelektrischen Maschine möglich.

Eine Belüftung des Schleifringsystems ist somit durch eine Durchzugsbelüftung, als auch oder ergänzend durch eine Fremdbelüftung möglich. Der Kühlluftstrom oder die Kühlluftströme werden durch Lüfter in und/oder an dem Schleifringsystem generiert.

Die Außenluft, die als kühlere Luft über die Kühlöffnungen in das Schleifringsystem gesaugt wird, wird innerhalb des Schleifringsystems über Kühlluftführungen bzw. Leitvorrichtungen unter anderem direkt an die Bürstentasche, die Bürstenhalterung und/oder die Bürsten geführt. Da dies die kritischen Wärmequellen sind, werden diese nun direkt mit dem sogenannten Kaltluftstrom direkt gekühlt.

Damit können in dem Schleifringsystem vorhandene Lüfter, wie z.B. Radiallüfter unterstützt werden.

Bei einem durchzugsbelüfteten Schleifringsystem wird kühlere Umgebungsluft angesaugt und im Schleifringsystem durch Lüfter und/oder Leitvorrichtungen, insbesondere an die Wärmequellen verteilt. Die nun im Schleifringsystem an den Bürstentaschen, den Bürstenhalterungen und/oder den Bürsten erwärmte Luft wird aus dem Schleifringraum in die Umgebung abgeführt. Die Luftströmung wird dabei von Saug- und/oder Drucklüftern generiert, die als Axial- oder Radiallüfter ausgeführt sind.

Filtermatten am Zugang und/oder am Abgang können dabei die verschmutzte Luft filtern.

Bei einem geschlossenen Schleifringsystem wird der in einem Zwischenkühler rückgekühlte Innenkühlkreislauf durch Lüfter und/oder Leitvorrichtungen, insbesondere an die Wärmequellen innerhalb des geschlossenen Gehäuses des Schleifringsystems verteilt. Die nun im Schleifringsystem an den Bürstentaschen, den Bürstenhalterungen und/oder den Bürsten erwärmte Luft wird aus dem Schleifringraum in den Zwischenkühler geleitet. Diese Luftströmung wird dabei von Saug- und/oder Drucklüftern generiert, die als Axial- oder Radiallüfter ausgeführt sind und innerhalb des Gehäuses des Schleifringsystems angeordnet sind.

Die Erfindung sowie weitere vorteilhafte Ausgestaltungen der Erfindung werden anhand prinzipiell dargestellter Ausführungsbeispiele näher erläutert. Darin zeigen:
- FIG 1: eine Bürstenhalterung,
- FIG 2 bis FIG 5: jeweils ein Trägersegment mit Bürstenhaltung,
- FIG 6 bis FIG 8: jeweils einen Schleifring,
- FIG 9: eine Bürstenbrücke und
- FIG 10: eine prinzipiell dargestellte dynamoelektrische Maschine mit Schleifringsystem.

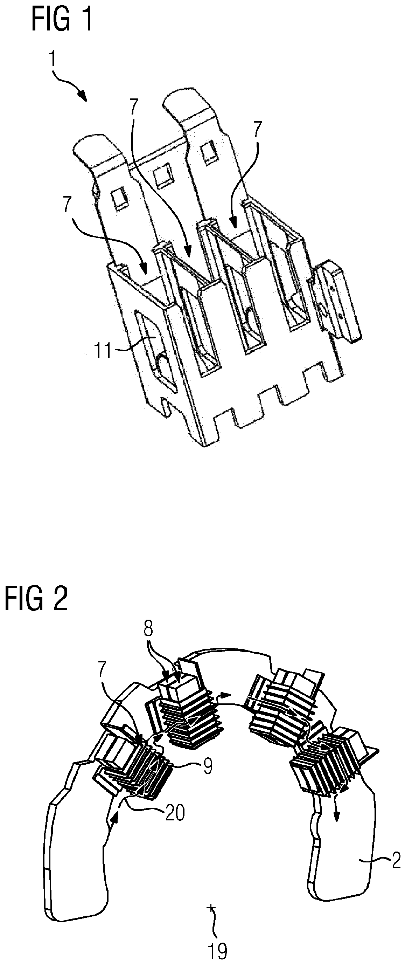

FIG 1 zeigt eine Bürstenhalterung 1 mit Bürstentaschen 7 in diesem Fall drei parallelen Aufnahmetaschen, in die Bürsten 8 einsetzbar sind. In diesem Ausführungsbeispiel sind die Bürstentaschen 7 nur mit Ausnehmungen 11 versehen, um insbesondere eine Kühlung der Bürsten 8 zu erleichtern.

FIG 2 zeigt ein Trägersegment 2 an dem mehrere Bürstenhalterungen 1 angeordnet sind, wobei ein Trägersegment 2 für je eine elektrische Phase U, V, M eines Schleifringsystems 13 vorgesehen ist. Die Bürstentaschen 7 zeigen in dieser Ausführung Rippen 9, die im Wesentlichen tangential zu einer Achse 19 verlaufen.

Es sind grundsätzlich auch Ausführungen der Bürstentaschen 7 oder Bürstenhalterungen 1 möglich, bei denen Ausnehmungen 11 und oberflächenvergrößernde Strukturen, wie Rippen 9 realisiert sind.

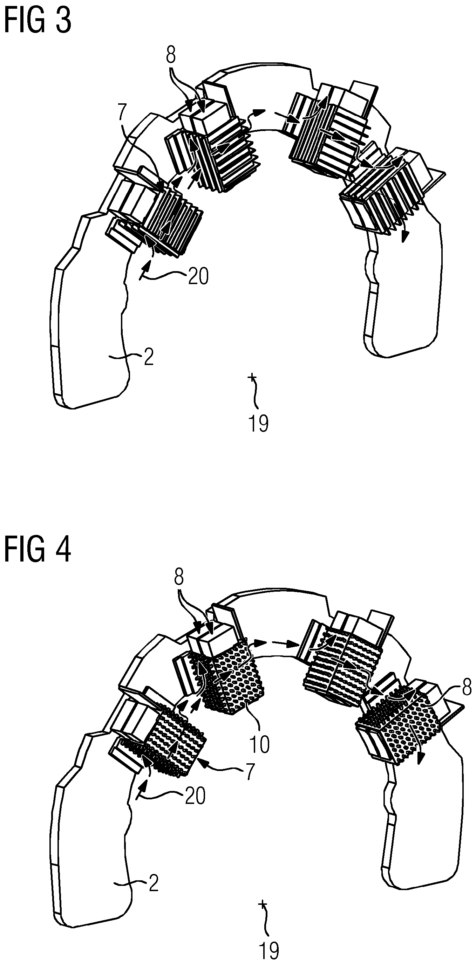

FIG 3 zeigt eine Mischung von Verlaufsformen der Rippen 9, indem zum einen eine tangentiale Verlaufsform, als auch eine radiale Verlaufsform an einer Bürstenhalterung 1 vorhanden ist. Damit wird ein Kühlluftstrom nicht nur in Tangentialrichtung sondern auch in Radialrichtung geführt, was die Kühlung dieser Bürstenhalterung 1 weiter verbessert.

FIG 4 zeigt ein weiteres Trägersegment 2 mit Bürstentaschen 7, deren Oberfläche mit Nadeln 10 bzw. Noppen versehen ist, um die Oberfläche zu vergrößern und damit die Kühlung zu verbessern. Auch hier kann ein Kühlluftstrom 20 sowohl in Tangential- als auch Radialrichtung geführt werden.

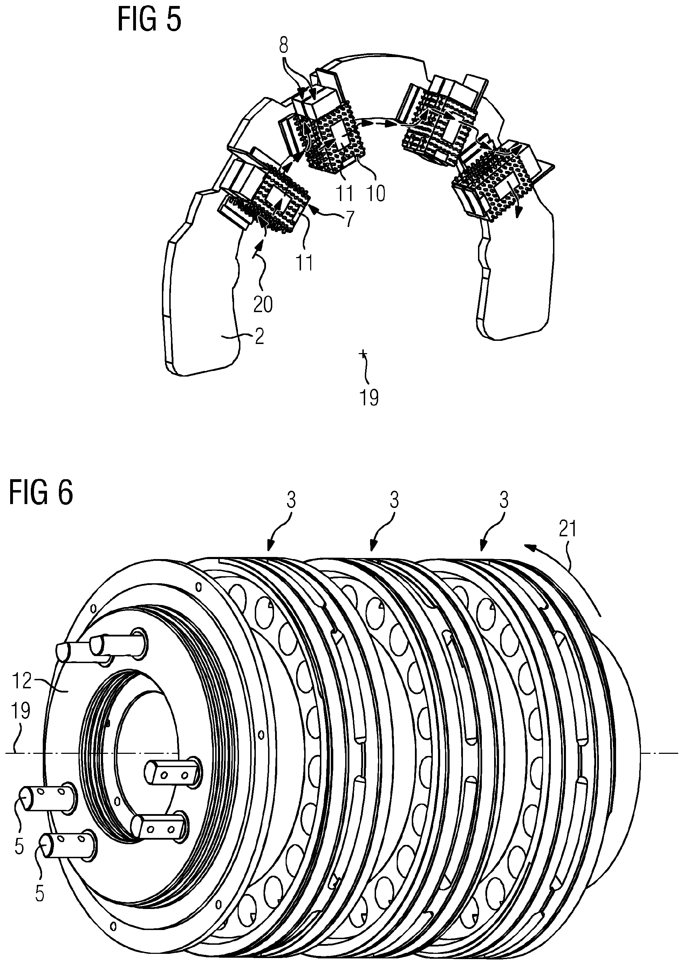

FIG 5 zeigt eine Bürstentasche 7, deren Haltefunktion minimiert wurde, indem an die Bürstentasche 7 zusätzlich eine vorgegebene Anzahl von Ausnehmungen 11 vorgesehen wurden. An den verbliebenen Führungen der Bürste 8 sind Nadeln 10 angebracht, so dass eine direkte Kühlung Bürsten 8 und eine Kühlung der Bürstentasche 7 ermöglicht wird.

FIG 6 zeigt eine Schleifringeinheit mit drei einzelnen Schleifringen 3, die axial hintereinander angeordnet sind und durch eine Isolierung 4 voneinander getrennt sind. Jeder Schleifring 3 ist für eine elektrische Phase U oder V oder M vorgehen. An einem axialen Ende dieser Anordnung befindet sich ein Stützring 12 aus dem Kontaktstellen 5 achsparallel ragen und die einen elektrischen Anschluss eines Wicklungssystems 17 eines Rotors 16 erlauben.

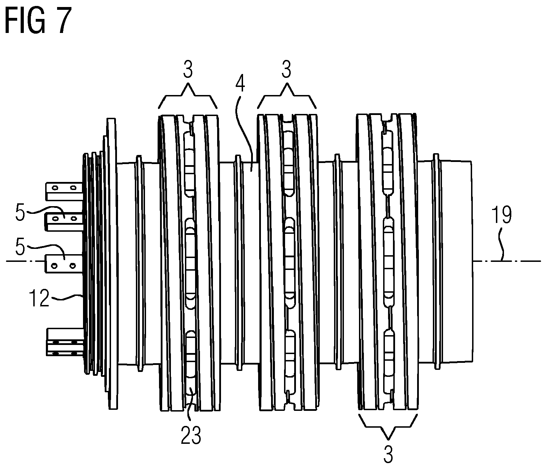

FIG 7 zeigt in einer Queransicht das Schleifringsystem 3 gemäß FIG 6.

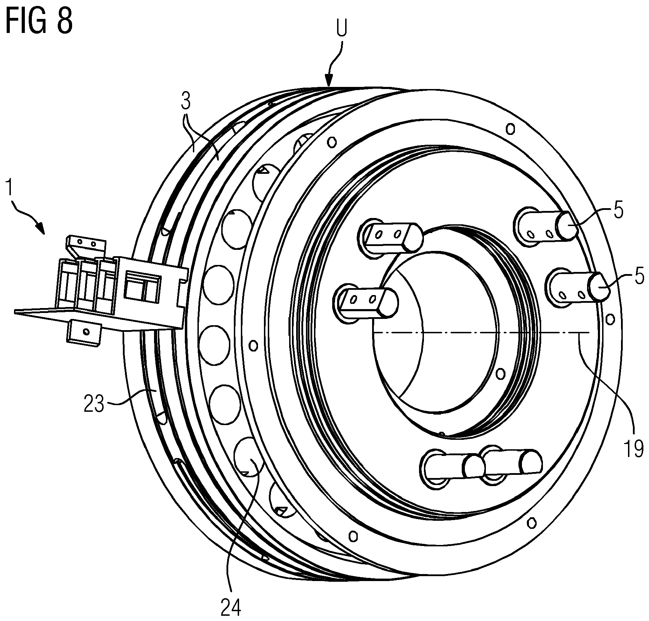

FIG 8 zeigt einen einzelnen Schleifring 3 beispielsweise der Phase U einer Schleifringeinheit mit den vorhin benannten Elementen, wie Kontaktstellen 5, Stützring 12, radialen Kühlöffnungen 23 und axialen Kühlöffnungen 24. Des Weiteren wird dort prinzipiell gezeigt, wie eine Bürstenhalterung 1 am Schleifring 3 angeordnet sein kann.

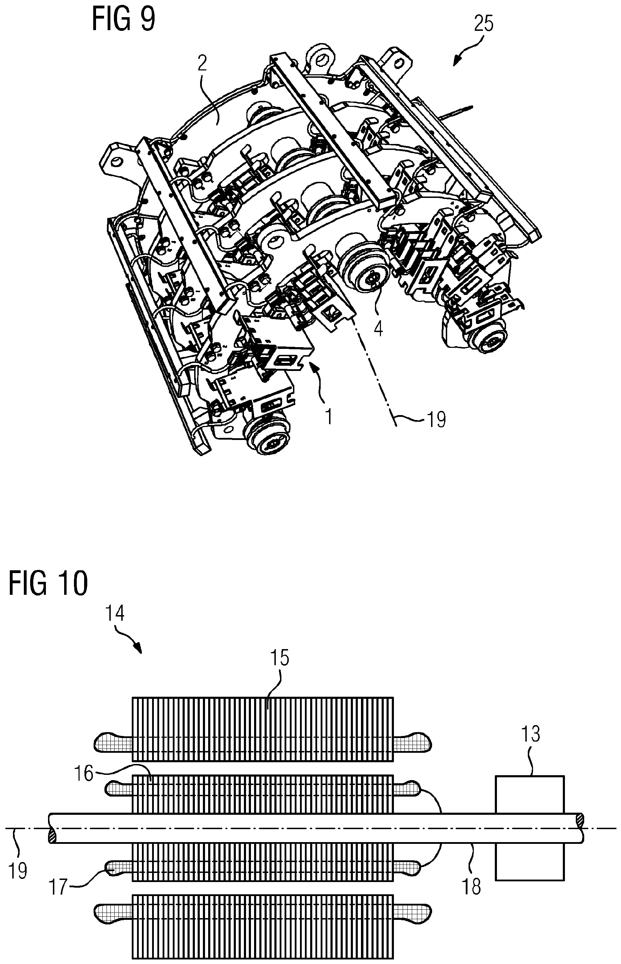

FIG 9 zeigt eine Bürstenbrücke, bei der vier Trägersegmente 2 axial hintereinander angeordnet sind, wobei beispielsweise drei Trägersegmente 2 jeweils einer elektrischen Phase U, V, M zugeordnet sind und ein Trägersegment 2 Bürsten 8 für eine Erdung aufweist.

FIG 10 zeigt in einer prinzipiellen Darstellung die Anordnung eines Schleifringsystems 13 auf einer Welle 18, wobei die Schleifringe 3 ebenso wie der Rotor 16 um die Achse 19 rotiert. Das Schleifringsystem 13 ist dabei an der Stirnseite des Rotors 16 positioniert.

Ein Schleifringsystems 13 weist eine Bürstenbrücke, mit Trägersegmenten 2 und eine Schleifringeinheit mit Schleifringen 3 auf. Ein Trägersegment 2 weist eine oder mehrere Bürstenhalterungen 1 auf, die jeweils einem Schleifring 3 zuzuordnen sind. Jede Bürstenhalterung 1 weist eine oder mehrere Bürstentaschen 7 auf, in denen die Bürsten 8 positioniert sind. Die Bürsten 8 werden durch nicht näher dargestellte Vorrichtung auf den Schleifring 3 gedrückt, um einen ordnungsgemäßen Kontakt zu gewährleisten. Des Weiteren werden die Bürsten 8 durch dementsprechende Einrichtung bezüglich ihres Verschleißes überwacht. Des Weiteren weist das Schleifringsystem 13 Kontaktstellen 5, Stützring 12, radialen Kühlöffnungen 23 und axialen Kühlöffnungen 24 auf.

Bei einem durchzugsbelüfteten Schleifringsystem 13 wird vorzugsweise kühlere Umgebungsluft durch Lüfter angesaugt und im Schleifringsystem 13 durch ggf. weitere Lüfter und/oder Leitvorrichtungen, insbesondere an die Wärmequellen verteilt. Die nun im Schleifringsystem 13 an den Bürstentaschen 7, den Bürstenhalterungen 1 und/oder den Bürsten 8 erwärmte Luft wird aus dem Schleifringraum in die Umgebung geleitet. Die Luftströmung wird dabei von Saug- und/oder Drucklüftern generiert, die als Axial- oder Radiallüfter ausgeführt sind und am oder im Schleifringraum angeordnet sind.

Filtermatten am Zugang und/oder am Abgang können dabei die verschmutzte Luft filtern.

Bei einem geschlossenen Schleifringsystem 13 wird der in einem Zwischenkühler rückgekühlte Innenkühlkreislauf durch Lüfter und/oder Leitvorrichtungen, insbesondere an die Wärmequellen innerhalb des geschlossenen Gehäuses des Schleifringsystems 13 verteilt. Die nun im Schleifringsystem 13 an den Bürstentaschen 7, den Bürstenhalterungen 1 und/oder den Bürsten 8 erwärmte Luft wird aus dem Schleifringraum, in den nicht näher dargestellten Zwischenkühler geleitet. Diese Luftströmung wird dabei von Saug- und/oder Drucklüftern generiert, die als Axial- oder Radiallüfter ausgeführt sind und innerhalb des Gehäuses des Schleifringsystems 13 angeordnet sind.

Derartige kompakte Schleifringsysteme 13 eignen sich vor allem für dynamoelektrischen Maschinen 14 mit vergleichsweise hoher Leistung im MW-Bereich. Dabei sind diese Maschinen 14 besonders als Generatoren, insbesondere doppelt gespeiste Asynchronmaschinen von Windkraftanlagen geeignet, da der vorhandene Bauraum in einer Gondel einer Windkraftanlage vergleichsweise knapp bemessen ist, und trotzdem vergleichsweise große Leistungen im Generator übertragen werden sollen.

## Patentansprüche

1. Bürstenhalterung (1) eines Schleifringsystems (13), einer elektrisch erregten dynamoelektrischen Maschine (14), wobei die Bürstenhalterung (1) Mittel zur Kühlung von Bürsten (8) in der Bürstenhalterung (1) und/oder der Bürstenhalterung (1) vorsieht.

2. Bürstenhalterung (1) nach Anspruch 1, **dadurch gekennzeichnet, dass** die Bürstenhalterung (1) oberflächenvergrößernde Strukturen aufweist.

3. Bürstenhalterung (1) nach Anspruch 2, **dadurch gekennzeichnet, dass** die Bürstenhalterung (1) eine oder mehrere Bürstentaschen (7) aufweist, wobei die Oberfläche der Bürstenhalterung (1) und/oder der Bürstentaschen (7) Rippen (9) und/oder Nadeln (10) und/oder Ausnehmungen (11) aufweist, um eine Kühlung der Bürsten (8) und/oder der Bürstenhalterung (1) zu ermöglichen.

4. Trägersegment (2), **dadurch gekennzeichnet, dass** an dem Trägersegment (2) eine oder mehrere Bürstenhalterungen (1) nach einem der Ansprüche 1 bis 3 angeordnet sind.

5. Schleifringsystem (13), **dadurch gekennzeichnet, dass** das Schleifringsystem (13) ein oder mehrere Trägersegmente (2) nach Anspruch 4 aufweist.

6. Belüftungssystem eines Schleifringsystems (13) nach Anspruch 5, **dadurch gekennzeichnet, dass** innerhalb des Schleifringsystems (13), das geschlossen oder offen ausgeführt ist, Luft derart führbar ist, dass die Bürstenhalterungen (1), und/oder die Bürstentaschen (7) kühlbar sind.

7. Belüftungssystem nach Anspruch 6, **dadurch gekennzeichnet, dass** Kühlluftströme radial und/oder in Umfangsrichtung an den Bürstenhalterungen (1) vorbeiführbar sind.

8. Dynamoelektrische Maschine, insbesondere Generator einer Windkraftanlage mit einem Belüftungssystem nach Anspruch 7 oder einem Schleifringsystem (13) nach Anspruch 5.

9. Dynamoelektrische Maschine nach Anspruch 8, **dadurch gekennzeichnet, dass** der Generator eine doppelt gespeiste Asynchronmaschine ist.
